# EUROPEAN PATENT SPECIFICATION

(11) **EP 4 092 294 B1**
(45) Date of publication and mention of the grant of the patent: **12.03.2025**
(21) Application number: 22173251.4
(22) Date of filing: 13.05.2022
(51) Int. Cl.: F16H 61/47

(54) **A METHOD AND A SYSTEM FOR CONTROLLING A HYDROSTATIC TRANSMISSION OF A MOTOR VEHICLE**
VERFAHREN UND SYSTEM ZUM STEUERN EINES HYDROSTATISCHEN GETRIEBES EINES KRAFTFAHRZEUGES
PROCÉDÉ ET SYSTÈME POUR COMMANDER UNE TRANSMISSION HYDROSTATIQUE D'UN VÉHICULE À MOTEUR

(30) Priority: 20.05.2021 IT 202100013100
(43) Date of publication of application: 23.11.2022
(73) Proprietor: CNH Industrial Italia S.p.A., 10156 Torino (IT)
(72) Inventor: DANNERBAUER, Harald, 4300 St. Valentin (AT); Melegari, Mario, 41126 Modena (IT); MORANDI, Gabriele, 41125 Modena (IT)
(74) Representative: CNH Industrial IP Department

(56) References cited:
- US-A1- 2013 259 622
- US-A1- 2014 121 911
- US-A1- 2021 140 143

## Description

### TECHNICAL FIELD

The invention concerns a method and system for controlling a hydrostatic transmission of a motor vehicle, in particular a work vehicle such as a tractor.

### BACKGROUND OF THE INVENTION

Motor vehicles like tractors are normally provided with a clutch being drivable by modulating the depression of a clutch pedal.

Adjusting the position of the clutch pedal, for example at the vehicle start, causes a gradual advancing of the vehicle. This gradual advancing, which is obtained by adjusting the position of the clutch pedal, is often defined with the English wording "clutch inching".

The above gradual advancing is associated to the occurrence of slipping in the clutch.

A controlled modulation of the position of the clutch corresponds to the control of the slipping, which allows the vehicle speed being adjusted while maintaining the engine speed stationary.

However, the clutch operation in slipping conditions causes a generation of heat and an increased wearing of the clutch itself, especially if the slipping conditions are prolonged in time.

Therefore, the clutch is potentially subject to damages.

This holds even more in the case of some existing tractors provided with a hydrostatic transmission. Indeed, the clutch of such a kind of tractors is usually simpler and smaller than those of other kinds of work vehicle are. In particular, the lubrication of the clutch is limited, such that the risk of overloading the clutch is higher.

US2014/121911A, US2013/259622A and US2021/140143 all foresee solutions to this problem but leave room for further improvements.

Therefore, the need is felt to avoid damages to the clutch reliably without impairing the normal functionality of the vehicle.

An object of the invention is to satisfy the need above, preferably in a simple and cost effective manner.

### SUMMARY OF THE INVENTION

According to the invention, the object is reached by a method and a system for controlling a hydrostatic transmission of a motor vehicle as defined in the independent claims.

Dependent claims set out particular embodiments of the invention.

### BRIEF DESCRIPTION OF DRAWINGS

For a better understanding of the invention, preferred embodiments are disclosed in the following, by way of a nonlimiting examples, with reference to the attached drawings wherein:
- Figure 1 is a schematic representation of a motor vehicle comprising a system according to an embodiment of the invention,
- Figure 2 is a graph of a mapping between an input command to the system and a limit drive torque transmissible to a drive axle of the vehicle,
- Figure 3 is an illustrative chart depicting four possible operative configurations of the motor vehicle, and
- Figures 4 and 5 illustrate time charts of quantities of the motor vehicle as the result of a method implemented by the system and according to respective different operative configurations of the motor vehicle.

### DETAILED DESCRIPTION OF THE INVENTION

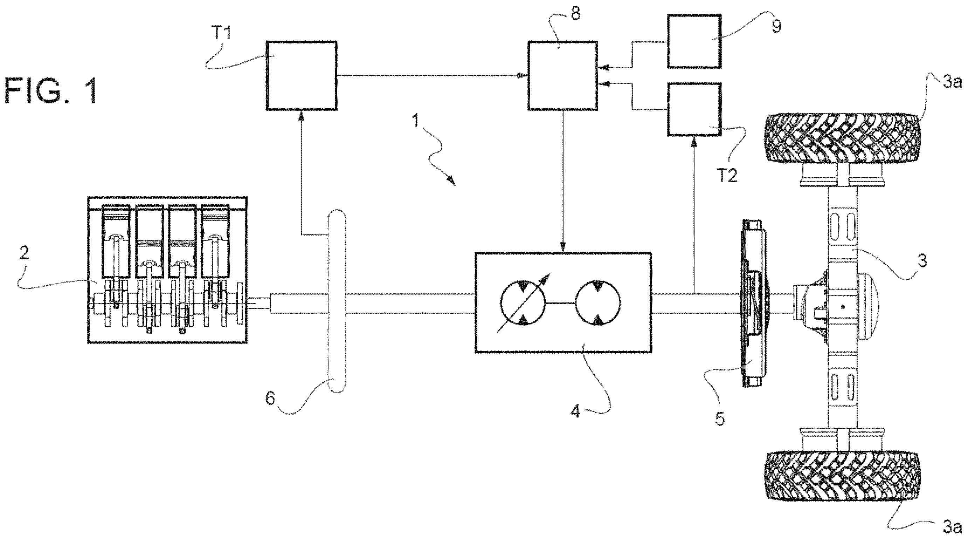

In Figure 1, reference number 1 indicates, as a whole, a motor vehicle, in particular a work vehicle such as a tractor.

Vehicle 1 comprises an engine 2, a drive axle 3, and a hydrostatic transmission 4 as a continuously variable transmission (CVT).

The drive axle 3 can be coupled to the transmission 4, such that the latter can drive the drive axle 3. The drive axle 3 carries a pair of wheels 3a.

Moreover, the transmission 4 can be coupled to the engine 2, such that the latter can drive the transmission 4 and thus the drive axle 3 accordingly.

Therefore, the drive axle 3 can be coupled to the engine 2 via the transmission 4.

Vehicle 1 further comprises a clutch 5 being configured to connect the engine 2 and the drive axle 3 selectively, such that the engine 2 can drive the drive axle 3 through the transmission 4.

In particular, the clutch 5 is arranged between the transmission 4 and the drive axle 3. More in particular, the clutch 5 is configured to connect the drive axle 3 and the transmission 4 selectively.

The clutch 5 has two positions, of which one is a fully disengaged position, in which the engine 2 and the drive axle 3 are completely disconnected, and the other one is a fully engaged position, in which the engine 2 can be connected to the drive axle 3.

Specifically, the clutch 5 in the fully engaged position connects the drive axle 3 to the transmission 4. In this case, the transmission 4 drives the drive axle 3 in the fully engaged position.

No slipping occurs in the clutch 5 in the fully engaged position.

Preferably, the vehicle 1 comprises a damping assembly, in particular including a damper 6, more in particular a dual mass flywheel. The damping assembly is arranged between the engine 2 and the transmission 4 and is configured to connect the engine 2 to the transmission 4.

According to a not shown example, the clutch 5 may be part of the damping assembly. In this case, the clutch 5 would be configured to connect selectively the engine 2 and the transmission 4.

Vehicle 1 further comprises a system for controlling the hydrostatic transmission 4 to drive the drive axle 3. The system comprises a control unit 8, which is programmed to implement a method according to the invention. Control unit 8 is connected to the transmission 4.

Control unit 8 is also connected to a command member 9 of vehicle 1. Command member 9 is operable by a driver of the vehicle 1. Moreover, command member 9 is configured to emit an input command based on how the driver operates the same command member 9. More precisely, command member 9 can take a plurality of positions; accordingly, the input command depends on the position taken by command member 9, in particular due to the choice of the driver. Preferably, command member 9 is a clutch pedal without any loss of generality; command member 9 may alternatively be a button, a lever, or the like.

Control unit 8 controls the clutch 5 in the fully disengaged position only for one specific position of command member 9. In particular, the clutch 5 is moved in the fully disengaged position only when the clutch pedal is fully depressed.

Otherwise, control unit 8 maintains the clutch 5 in the fully engaged position.

As a possible alternative, the command member 9 may be also connected to the clutch 5 directly; clutch 5 may be controlled in this case by the command member 9 in the fully disengaged position only for the specific position of command member 9 and in the fully engaged position otherwise.

Control unit 8 is configured to detect the input command emitted by command member 9.

Moreover, control unit 8 is configured to determine a limit drive torque transmissible to the drive axle 3 as a function of the detected input command through a predetermined mapping.

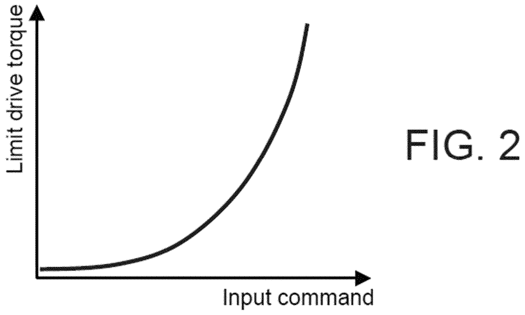

The mapping is preferably stored in the control unit 8. An example of the mapping is graphically represented in Figure 2. Control unit 8 may store a plurality of different mappings. The mapping that is actually used to determine the limit drive torque may depend on one or more operative parameters of the vehicle 1, possibly associated to the transmission 4. For example, the used mapping may depend on the travel direction of the vehicle 1 (forward or rearward movement of the vehicle 1). Additionally or alternatively, the used mapping may depend on one or more parameters of the transmission 4 affecting the promptness thereof, such as the pump displacement of the transmission 4, possibly as a function of other parameters of the vehicle 1, e.g. the torque acting on the drive axle 3 or the speed of engine 2.

The input command of Figure 2 (abscissa axis) may be expressed for example by means of a percentage value, where 0% corresponds to the specific position of command member 9 (fully depressed clutch pedal) and 100% corresponds to a non-operated or resting command member 9 (released clutch pedal).

The limit drive torque of Figure 2 (ordinate axis) may be expressed for example by means of another percentage value, which represents a fraction of the torque delivered by the engine 2. The same limit drive torque may also be expressed in absolute terms, as well.

The limit drive torque essentially emulates the amount of torque needed to cause the clutch 5 to slip when partially engaged in accordance with the value of input command. However, the clutch 5 is always maintained in the fully engaged position, unless for the specific position of command member 9. Thus, the limit drive torque determined through the mapping is used to simulate the slipping of the clutch 5 by means of the transmission 4, which can be controlled appropriately to obtain a corresponding behavior of the vehicle 1 to that caused by the slipping of the clutch 5.

Control unit 8 is configured to acquire a first quantity indicative of an actual torque acting on the drive axle 3 and compute a desirable speed value for the vehicle 1 as a function of a relationship between the limit drive torque determined through the mapping and the actual torque indicated by the acquired first quantity.

The desirable speed value is different, in general, from an actual speed of the vehicle 1 and represents the result of a simulation of the slipping according to the above relationship.

To detect the first quantity, the system may comprise a first transducer T1 connected to control unit 8. The transducer T1 may comprise a torque sensor coupled to the damping assembly for detecting the torque at the damper 6 or a pressure sensor coupled to the transmission 4 for detecting the pressure within the transmission 4. Clearly, the torque at the damper 6 and the pressure within the transmission 4 are indicative of a load and thus of the torque acting on the drive axle 3.

Alternatively, the first quantity may be directly estimated by the control unit 8, which is also configured to control the engine 2. In particular, by controlling the engine 2, the control unit 8 may be also configured to determine the load of the engine 2 and to derive the first quantity therefrom.

The desirable speed value is computed to have a correspondence with the result of a dynamic equilibrium between the limit drive torque and the actual torque. In this manner, the speed value represents the speed that the vehicle 1 would have had in case of the clutch 5 being partially engaged and accordingly having the computed limit drive torque.

Control unit 8 is configured to determine a target speed for the vehicle 1 based on the computed desirable speed value. Furthermore, control unit 8 is configured to set the target speed as a set-point for controlling the transmission 4. In other words, the transmission 4 is controlled setting the target speed as a set-point. For example, the transmission 4 is controlled in a closed loop fashion; the output speed of the transmission 4 is the controlled or process variable, whereas the set-point represent the reference variable. The system further comprises a transducer T2 configured to detect the output speed of the transmission 4. Control unit 8 is configured to acquire the output speed of the transmission 4 and, specifically, to use it as a feedback for the closed-loop control. Alternatively, the transmission 4 is open loop controlled based on the set-point.

More in detail, the computation of the desirable speed value comprises the computation of an acceleration value based on a ratio of a difference between the limit drive torque and a modulus of the actual torque to a quantity representing a mass of the vehicle 1.

The quantity that represents the mass may correspond for example to the gross vehicle weight or may alternatively be an estimate by means of an observer or an estimator programmed in the control unit 8. Possibly, deterministic observers or stochastic observers, such as Kalman filters, may be used.

The computation of the difference changes based on the operative condition of the vehicle 1. The operative condition is established by the travel direction of the vehicle and by the direction of the actual torque acting on the drive axle 3.

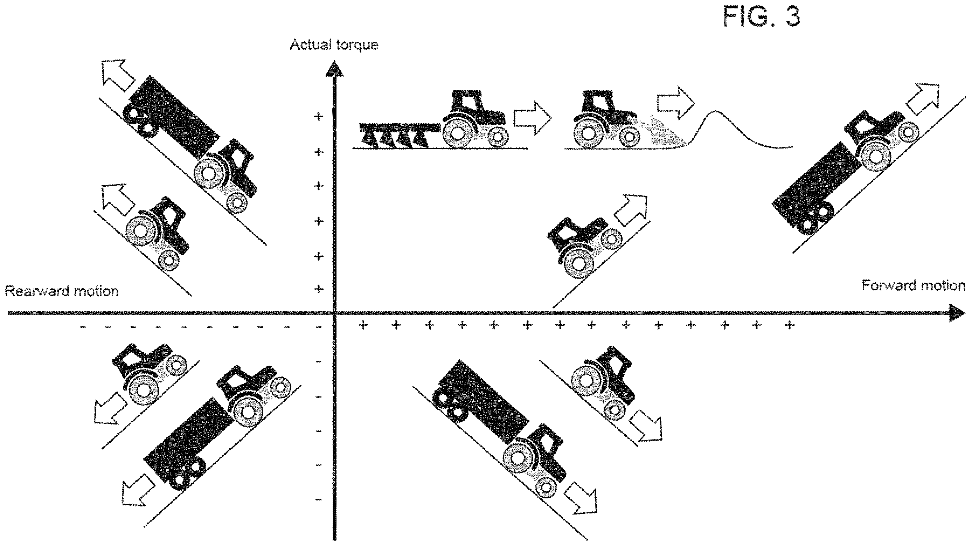

Figure 3 is a chart illustrating four operative conditions of the vehicle 1 into respective four quadrants of the chart. The two left quadrants regard the rearward motion of the vehicle 1, whereas the two right quadrants regard the forward motion of the vehicle 1.

The upper left quadrant exemplarily shows an uphill street with respect to the rearward travel direction of the vehicle 1; therefore, the actual torque acting on the drive axle 3 will oppose to the movement of the vehicle 1. In a similar manner, the upper right quadrant exemplarily shows an uphill street with respect to the forward travel direction of the vehicle 1; therefore, the actual torque will oppose to the movement as well. The actual torques will be regarded as positive, even if having opposite directions, because also the travel directions are opposite. This means that the actual torque is conventionally positive when the direction thereof is such as to oppose to the movement of the vehicle 1, regardless of the actual direction of this movement.

On the contrary, the actual torque is conventionally negative when the direction thereof is such as to favor the movement of the vehicle 1, regardless of the actual direction of the movement. This clearly occurs in the lower quadrants of Figure 3, where downhill streets are shown with respect to the respective opposite travel directions of the vehicle 1.

Control unit 8 is configured to determine if the actual torque is positive or negative, in particular through the first quantity, which reveals the direction of the actual torque, and through information about the travel direction of the vehicle. For example, control unit 8 may be configured to extract the information from a switching device, which is operable to switch the travel direction of the vehicle 1. The direction of the torque and the travel direction of the vehicle 1 determine one of the four operative conditions of Figure 3; this means that control unit 8 can determine the operative condition too, together with the sign of the actual torque.

Control unit 8 computes the difference as the limit drive torque minus the modulus of the actual torque when the actual torque is positive. On the contrary, control unit 8 computes the difference as the modulus of the actual torque minus the limit drive torque when the actual torque is negative.

The acceleration value is, in particular, the ratio of the difference to the quantity representing the mass of the vehicle 1. The acceleration value may be negative, which corresponds to a deceleration of the vehicle 1.

Once the acceleration value is computed, for the computation of the desirable speed value, the control unit 8 acquires a quantity indicative of the actual current speed of the vehicle 1. For example, control unit 8 acquires the quantity from the transducer T2. Alternatively, control unit 8 may acquire the quantity from different transducers, for example configured to detect a speed of the drive axle 3, or even through estimation based on how control unit 8 controls the speed of the engine 2.

Then, control unit 8 computes the desirable speed value by summing the actual current speed to the acceleration value multiplied by a proportional gain. The proportional gain is a coefficient, which may be differently set by control unit 8 if the acceleration value is positive or negative. In other words, control unit 8 sets a first and a second coefficient as the proportional gain respectively when the acceleration value is positive and negative. The first and the second coefficient may be appropriately tuned experimentally, in order to obtain the most reliable simulation of the slipping of clutch 5. Control unit 8 preferably stores the first and the second coefficient. The first and the second coefficient may even be equal to one another.

The first and the second coefficient dimensionally represent a sampling time.

Alternatively, the desirable speed value may be computed through a time integration, in particular a numerical time integration of the acceleration value.

In any case, the desirable speed value is not merely an estimation of the future speed of the vehicle 1, but represents a suitable speed of the vehicle 1 in case of a virtual slipping of the clutch 5, in particular the slipping that would have been caused by the relationship between the limit drive torque and the actual torque, in the case of an actual modulation of the clutch 5.

The computed desirable speed value may coincide with the target speed, in order to obtain a simulation of the slipping of clutch 5, even if the latter is actually in the fully engaged position. However, the computed desirable speed value might also not coincide with the target speed. The reason for this lays in that the system preferably comprises a speed control device, such as an accelerator pedal or more preferably a cruise control device. The speed control device preferably makes part of the vehicle 1 and is operable by the driver to set a requested speed for the vehicle 1. For example, the cruise control device may comprise a command, such as a lever, allowing the driver to select a requested speed to be maintained during the movement of the vehicle 1.

Hence, the target speed may be determined as the computed desirable speed value or the requested speed depending on the operative condition of the vehicle 1.

In particular, the control unit 8 is configured to extract the requested speed from the speed control device and to determine the target speed as the result of a comparison between the computed desirable speed value and the requested speed.

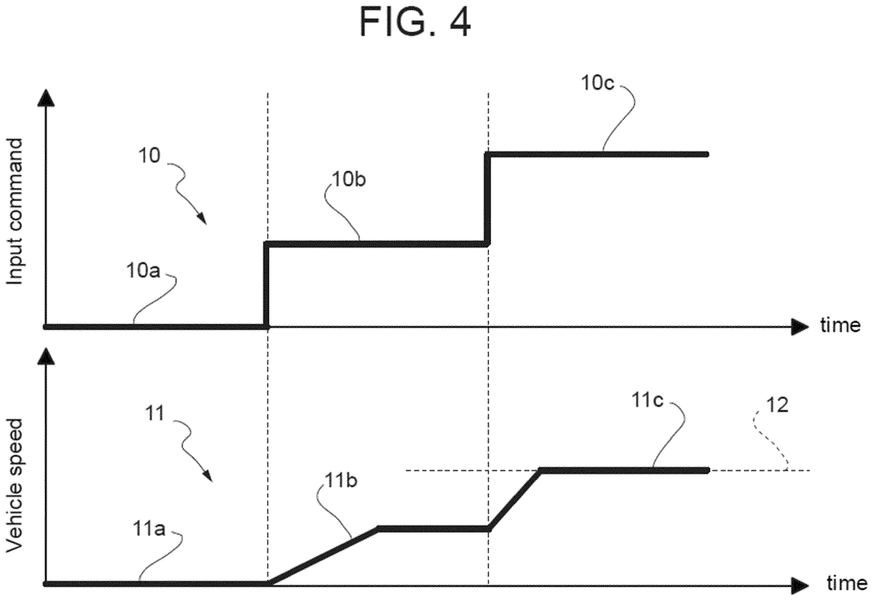

More in particular, the target speed is determined as the lower one between the computed desirable speed value and the requested speed when the actual torque is positive. This situation is for example depicted in Figure 4.

Figure 4 shows two time charts, where the abscissa axes are the same and represent time.

The ordinate axis of the upper time chart represents the input command increasing stepwise, in particular from a value corresponding to the aforementioned specific position of command member 9 (fully depressed clutch pedal) to a value corresponding to the resting command member 9 (released clutch pedal), specifically passing through a value corresponding to an intermediate position. Hence, a stepwise curve 10 for the input command is shown in the upper time chart. Curve 10 has three portions 10a, 10b, 10c respectively corresponding to the specific position, the intermediate position, and the resting command member 9.

The ordinate axis of the lower time chart represents the speed of the vehicle 1. Hence, a curve 11 for the vehicle speed is shown in the lower time chart. In particular, curve 11 has three portions 11a, 11b, 11c corresponding to portions 10a, 10b, 10c, respectively. Moreover, a horizontal line 12 represents the requested speed during all the movement of the vehicle 1.

In particular, portion 11a is horizontal and corresponds to a zero speed. Portion 11b increases from zero to a target speed corresponding to the computed desirable speed value based on the input command of portion 10b. Indeed, the computed desirable speed value is lower than the requested speed. Portion 11c increases from the former target speed to a further target speed corresponding to the requested speed. Here, the requested speed cannot be exceeded, even if the desirable speed value is higher than the requested speed.

In this manner, the cruise control device and the simulation of the slipping of the clutch 5 can coexist.

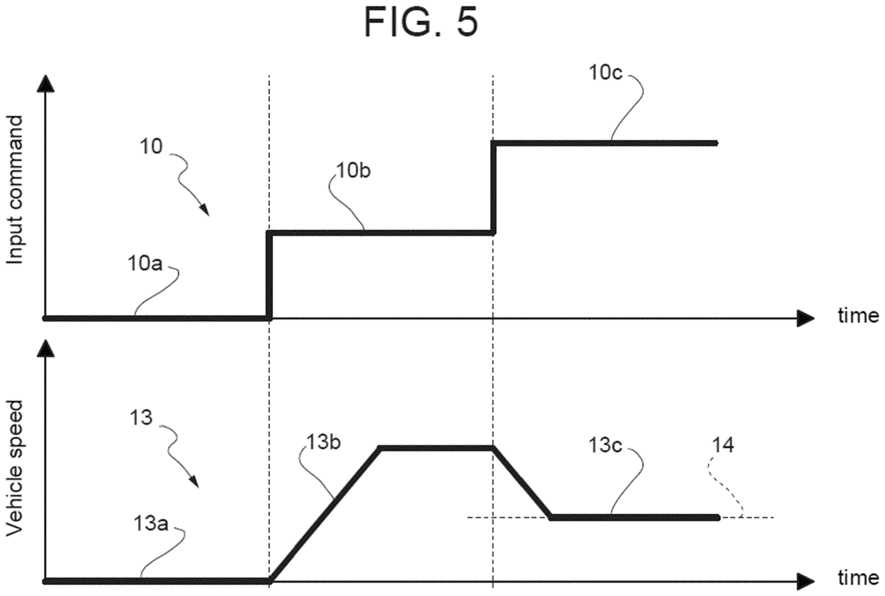

On the other hand, preferably, when the actual torque is negative, the target speed is determined as the higher one between the computed speed and the requested speed. This situation is for example depicted in Figure 5.

Figure 5 is analogous to Figure 4; in particular, the upper chart of Figure 5 is the same of that of Figure 4. Moreover, the axes are the same.

A curve 13 for the vehicle speed is shown in the lower time chart of Figure 5. In particular, curve 13 has three portions 13a, 13b, 13c corresponding to portions 10a, 10b, 10c, respectively. Moreover, a horizontal line 14 represents the requested speed during all the movement of vehicle 1.

In particular, portion 13a is horizontal and corresponds to a zero speed. Portion 13b increases from zero to a target speed corresponding to the computed desirable speed value based on the input command of portion 10b. Here, the computed desirable speed value is allowed to exceed the requested speed. Actually, the target speed is the higher one between the computed desirable speed value and the requested speed. On the other hand, portion 13c decreases from the former target speed to a further target speed corresponding to the requested speed. Here, the target speed cannot decrease more than the requested speed, even if the desirable speed value is lower than the requested speed.

Preferably, the control of the transmission 4 based on the established set-point further involves the setting of constraints regarding the movement of the vehicle 1. In particular, the acceleration of the vehicle 1 may be actively controlled and/or limited by controlling the transmission 4.

For example, an acceleration set-point can be set. More in detail, control unit 8 is configured to control the transmission 4 based on a constant acceleration set-point, in addition to the speed set-point, or even merely by setting an upper or lower limit for the acceleration of the vehicle 1. Possibly, the constant acceleration set-point coincides with the upper limit, in case the aforementioned computed acceleration value is positive, or else with the lower limit, in case the acceleration value is negative.

Possibly, the upper limit or the lower limit, based on the sign of the acceleration value, may coincide with the acceleration value.

However, for example, if the actual torque is positive and the acceleration value is higher than a fixed upper limit set and preferably stored in the control unit, the upper limit will be the fixed upper limit. This case is a normal proper operation of the vehicle 1; indeed, there is no slipping of clutch 5 to be simulated here, because the transmittable torque to the axis is greater than the resistance offered by the actual torque. Hence, a positive acceleration of the vehicle 1 is allowed by the control unit 8 in a normal manner. There is no specific need for forcing a higher acceleration represented by the fixed upper limit. On the other hand, preventing the overcoming of the fixed upper limit is advantageous in terms of a reduced effort of the transmission 4 and engine 2.

This is shown, for example, in Figure 4: portions 11b and 11b shows increasing values of the vehicle speed according to the computed acceleration value in a constant manner until the target speed is reached.

According to another example, if the torque is positive and the acceleration value is negative, a slipping of the clutch 5 should be simulated. Hence, the control unit 8 requests a deceleration of the vehicle 1. Here, the deceleration may conveniently be the highest possible deceleration. A fixed lower limit for the acceleration may be set and preferably stored in control unit 8. Then, if the actual torque and the computed acceleration are respectively positive and negative, the lower limit will be the lowest between the fixed lower limit and the computed acceleration value. Thus, the deceleration will be higher than that set by the fixed lower limit only when the computed acceleration value is even lower than the fixed lower limit.

The situation is perfectly specular when the actual torque is negative. No slipping is to be simulated when the acceleration value is negative; the deceleration of the vehicle 1 is allowed by the control unit 8. If the acceleration value is positive, an acceleration of the vehicle 1 is requested to simulate the slipping of the clutch 5. Thus, the upper limit will be the highest between the computed acceleration value and the fixed upper limit; on the other hand, the lower limit will be the lowest, in modulus, between the acceleration value and the fixed lower limit.

In other words, the control unit 8 is configured to set a positive (upper) acceleration limit for the vehicle 1 during the control of the transmission 4 with the speed set-point. The set positive acceleration limit is the lower one between the computed acceleration value and a predetermined positive limit value (fixed upper limit) when the actual torque is positive. Furthermore, the set positive acceleration limit is the higher one between the computed acceleration value and the positive limit value when the actual torque is negative.

Similarly, the control unit 8 is configured to set a negative acceleration limit (lower limit) during the control of the transmission 4 with the speed set-point. The set negative acceleration limit is the higher one, in modulus, between the computed acceleration value and a predetermined deceleration limit value (modulus of the fixed lower limit) when the actual torque is positive. Furthermore, the set negative acceleration limit is the lower one, in modulus, between the computed acceleration value and the deceleration limit value when the actual torque is positive.

Clearly, the deceleration limit value is the modulus of the fixed lower limit, which is negative. Hence, the negative acceleration limit is the lower one between the computed acceleration value and the fixed lower limit, when the actual torque is positive. Similarly, the negative acceleration limit is the higher one between the computed acceleration value and the fixed lower limit, when the actual torque is negative.

In addition, but not necessarily, the control unit 8 is further configured to set a speed limit for the vehicle 1 during the control of the transmission 4, such that the vehicle speed does not exceed the speed limit even if the speed set-point is higher than the speed limit itself.

In view of the foregoing, the advantages of the system and the method according to the invention are apparent.

In particular, the clutch 5 is preserved without excluding the slipping feeling to the driver. Indeed, the slipping of the clutch 5 is emulated through the control of the transmission 4, without damaging the clutch 5.

The control of the transmission 4 is not in conflict with the typical cruise control features of work vehicles. On the contrary, a feature like cruise control perfectly coexists with the simulation of the slipping thanks to the setting of the target speed based on a comparison between the requested speed and the computed desirable speed value.

Eventually, it is clear that modifications can be made to the described method and system, which do not extend beyond the scope of protection defined by the claims.

## Claims

1. A method for controlling a hydrostatic transmission (4) of a motor vehicle (1) with a drive axle (3) driven by the hydrostatic transmission (4), the method comprising the steps of
a. detecting an input command emitted by a driver operable clutch pedal of the motor vehicle (1),
b. determining a limit drive torque transmissible to the drive axle (3) as a function of the detected input command through a predetermined mapping,
c. acquiring a first quantity indicative of an actual torque acting on the drive axle (3),
d. computing a desirable speed value for the motor vehicle (1) as a function of a relationship between the limit drive torque and the actual torque indicated by the acquired first quantity,
e. determining a target speed for the motor vehicle (1) based on the computed desirable speed value, and
f. setting the target speed as a set-point for controlling the hydrostatic transmission (4);
the method being **characterized in that** the step d. comprises the steps of
k. computing an acceleration value based on a ratio of a difference between the limit drive torque and a modulus of the indicated actual torque to a second quantity representing a mass of the motor vehicle (1),
l. computing the desirable speed value based on the computed acceleration value and the step k. further comprises the step of
m. computing the difference as the limit drive torque minus the modulus of the indicated actual torque, when the first quantity is indicative that the actual torque is directed to oppose to the movement of the motor vehicle (1),
and/or
n. computing the difference as the modulus of the indicated actual torque minus the limit drive torque, when the first quantity is indicative that the actual torque is directed to favor the movement of the motor vehicle (1).

2. The method of claim 1, wherein the step e. comprises the steps of
g. extracting a requested speed for the motor vehicle (1) from a speed control device of the motor vehicle (1),
h. determining the target speed as a result of a comparison between the computed desirable speed value and the requested speed.

3. The method of claim 2, wherein the step h. comprises the step of
i. determining the target speed as the lower one between the computed desirable speed value and the requested speed, when the first quantity is indicative that the actual torque is directed to oppose to the movement of the motor vehicle (1), and/or the step of
j. determining the target speed as the higher one between the computed speed and the requested speed, when the first quantity is indicative that the actual torque is directed to favor the movement of the motor vehicle (1).

4. The method of the foregoing claims, wherein the step 1. comprises
o. acquiring a third quantity indicative of an actual current speed of the motor vehicle (1),
p. setting a proportional gain as a first coefficient if the acceleration value is positive or as a second coefficient otherwise,
q. computing the desirable speed value based on an algebraic sum of the actual current speed indicated by the third quantity and the acceleration value multiplied by the proportional gain.

5. The method of any of the foregoing claims, further comprising the step of
r. setting a positive acceleration limit for the motor vehicle (1) during the control of the hydrostatic transmission (4) with the set-point of step f.,
wherein the set positive acceleration limit is the lower one between the computed acceleration value and a predetermined positive limit value, when the first quantity is indicative that the actual torque is directed to oppose to the movement of the motor vehicle (1), and
wherein the set positive acceleration limit is the higher one between the computed acceleration value and the positive limit value, when the first quantity is indicative that the actual torque is directed to favor the movement of the motor vehicle (1).

6. The method of any of the foregoing claims, further comprising the step of
s. setting a negative acceleration limit for the motor vehicle (1) during the control of the hydrostatic transmission (4) with the set-point of step f.,
wherein the set negative acceleration limit is the higher one, in modulus, between the computed acceleration value and a predetermined deceleration limit value, when the first quantity is indicative that the actual torque is directed to oppose to the movement of the motor vehicle (1), and
wherein the set negative acceleration limit is the lower one, in modulus, between the computed acceleration value and the deceleration limit value, when the first quantity is indicative that the actual torque is directed to favor the movement of the motor vehicle (1).

7. The method of any of the foregoing claims, further comprising the step of
t. setting a speed limit for the motor vehicle (1) during the control of the hydrostatic transmission (4) with the set-point of step f., such that a speed of the motor vehicle (1) does not exceed the speed limit even if the set-point is higher than the speed limit.

8. The method of any of the foregoing claims, further comprising the step of
u. controlling a clutch (5) of the motor vehicle (1) in a fully engaged position during the control of the hydrostatic transmission (4) with the set-point of step f.,
wherein the clutch (5) is arranged to selectively connect an engine (2) of the motor vehicle with the drive axle (3).

9. A system for controlling a hydrostatic transmission of a motor vehicle with a drive axle (3) driven by the hydrostatic transmission (4), the system comprising a control unit (8) programmed to implement the method of any one of the foregoing claims.

10. The system of claim 9, further comprising
- a first transducer (T1) coupled to the control unit (8) and configured to detect the first quantity,
wherein the control unit (8) stores the mapping.

11. The system of claim 9 or 10, further comprising a clutch (5) arranged to selectively connect an engine (2) of the motor vehicle (1) with the drive axle (3),
wherein the control unit (8) is further programmed to control the clutch (5) in a fully engaged position, during the implementation of said method.

## Patentansprüche

1. Verfahren zum Steuern eines hydrostatischen Getriebes (4) eines Kraftfahrzeugs (1) mit einer Antriebsachse (3), die von dem hydrostatischen Getriebe (4) angetrieben wird, wobei das Verfahren die nachfolgenden Schritte aufweist:
a. Erfassen eines Eingabebefehls, der von einem fahrerbedienbaren Kupplungspedal des Kraftfahrzeugs (1) ausgesendet wird,
b. Bestimmen eines Antriebsdrehmomentgrenzwerts für die Antriebsachse (3) in Abhängigkeit von dem erfassten Eingabebefehl mittels eines vorbestimmten Mappings,
c. Erfassen einer ersten Größe, die kennzeichnend für ein tatsächliches Drehmoment ist, das auf die Antriebsachse (3) wirkt,
d. Berechnen eines Soll-Geschwindigkeitswerts für das Kraftfahrzeug (1) in Abhängigkeit von einem Verhältnis zwischen dem Antriebsdrehmomentgrenzwert und dem tatsächlichen Drehmoment, das durch die erfasste, erste Größe gekennzeichnet ist,
e. Bestimmen einer Ziel-Geschwindigkeit für das Kraftfahrzeug (1) basierend auf dem berechneten Soll-Geschwindigkeitswert, und
f. Einstellen der Ziel-Geschwindigkeit als Sollwert zum Steuern des hydrostatischen Getriebes (4),
wobei das Verfahren **dadurch gekennzeichnet ist, dass** der Schritt d. die nachfolgenden Schritte aufweist:
k. Berechnen eines Beschleunigungswerts basierend auf einem Verhältnis aus einer Differenz zwischen dem Antriebsdrehmomentgrenzwert und einem Betrag des tatsächlichen Drehmoments mit einer zweiten Größe, die für eine Masse des Kraftfahrzeugs (1) steht,
l. Berechnen des Soll-Geschwindigkeitswerts basierend auf dem berechneten Geschwindigkeitswert und wobei der Schritt k. des Weiteren den nachfolgenden Schritt aufweist:
m. Berechnen der Differenz aus dem Antriebsdrehmomentgrenzwert abzüglich des Betrags des tatsächlichen Drehmoments, wenn die erste Größe kennzeichnend dafür ist, dass das tatsächliche Drehmoment so gerichtet ist, dass es der Bewegung des Kraftfahrzeugs (1) entgegenwirkt,
und/oder
n. Berechnen der Differenz aus dem Betrag des tatsächlichen Drehmoments abzüglich des Antriebsdrehmomentgrenzwerts, wenn die erste Größe kennzeichnend dafür ist, dass das tatsächliche Drehmoment so gerichtet ist, dass es die Bewegung des Kraftfahrzeugs (1) begünstigt.

2. Verfahren nach Anspruch 1, wobei der Schritt e. des Weiteren die nachfolgenden Schritte aufweist:
g. Auslesen einer angeforderten Geschwindigkeit für das Kraftfahrzeug (1) von einer Geschwindigkeitssteuerungsvorrichtung des Kraftfahrzeugs (1),
h. Bestimmen der Ziel-Geschwindigkeit als Ergebnis eines Vergleichs zwischen der berechneten Soll-Geschwindigkeit und der angeforderten Geschwindigkeit.

3. Verfahren nach Anspruch 2, wobei der Schritt h. des Weiteren die nachfolgenden Schritte aufweist:
i. Bestimmen der Ziel-Geschwindigkeit als die niedrigere aus dem berechneten Soll-Geschwindigkeitswert und der angeforderten Geschwindigkeit, wenn die erste Größe kennzeichnend dafür ist, dass das tatsächliche Drehmoment so gerichtet ist, dass es der Bewegung des Kraftfahrzeugs (1) entgegenwirkt, und/oder den nachfolgenden Schritt aufweist:
j. Bestimmen der Ziel-Geschwindigkeit als die höhere aus der berechneten Geschwindigkeit und der angeforderten Geschwindigkeit, wenn die erste Größe kennzeichnend dafür ist, dass das tatsächliche Drehmoment so gerichtet ist, dass es die Bewegung des Kraftfahrzeugs (1) begünstigt.

4. Verfahren nach einem der vorhergehenden Ansprüche, wobei der Schritt l. des Weiteren die nachfolgenden Schritte aufweist:
o. Erfassen einer dritten Größe, die kennzeichnend für eine tatsächliche, gegenwärtige Geschwindigkeit des Kraftfahrzeugs (1) ist,
p. Einstellen einer proportionalen Signalverstärkung als einen ersten Koeffizienten, wenn der Beschleunigungswert positiv ist, oder andernfalls als einen zweiten Koeffizienten,
q. Berechnen des Soll-Geschwindigkeitswerts basierend auf einer algebraischen Summe aus der tatsächlichen, gegenwärtigen Geschwindigkeit, die durch die dritte Größe gekennzeichnet ist, und dem Beschleunigungswert, der mit der proportionalen Signalverstärkung multipliziert wird.

5. Verfahren nach einem der vorhergehenden Ansprüche, das des Weiteren den nachfolgenden Schritt aufweist:
r. Einstellen eines positiven Beschleunigungsgrenzwerts für das Kraftfahrzeug (1) während des Steuerns des hydrostatischen Getriebes (4) mit dem eingestellten Sollwert aus Schritt f.,
wobei der eingestellte Beschleunigungsgrenzwert der niedrigere aus dem berechneten Beschleunigungswert und einem vorbestimmten, positiven Grenzwert ist, wenn die erste Größe kennzeichnend dafür ist, dass das tatsächliche Drehmoment so gerichtet ist, dass es der Bewegung des Kraftfahrzeugs (1) entgegenwirkt, und
wobei der eingestellte, positive Bescheinigungsgrenzwert der höhere aus dem berechneten Beschleunigungswert und dem positiven Grenzwert ist, wenn die erste Größe kennzeichnend dafür ist, dass das tatsächliche Drehmoment so gerichtet ist, dass es die Bewegung des Kraftfahrzeugs (1) begünstigt.

6. Verfahren nach einem der vorhergehenden Ansprüche, das des Weiteren den nachfolgenden Schritt aufweist:
s. Festlegen eines negativen Beschleunigungsgrenzwerts für das Kraftfahrzeug (1) während des Steuerns des hydrostatischen Getriebes (4) mit dem eingestellten Sollwert aus Schritt f.,
wobei der eingestellte, negative Beschleunigungsgrenzwert der höhere ist, als Betrag, aus dem berechneten Beschleunigungswert und einem vorbestimmten Verzögerungsgrenzwert, wenn die erste Größe kennzeichnend dafür ist, dass das tatsächliche Drehmoment so gerichtet ist, dass es der Bewegung des Kraftfahrzeugs (1) entgegenwirkt, und
wobei der eingestellte, negative Beschleunigungsgrenzwert der niedrigere ist, als Betrag, aus dem berechneten Beschleunigungsgrenzwert und dem Verzögerungsgrenzwert, wenn die erste Größe kennzeichnend dafür ist, dass das tatsächliche Drehmoment so gerichtet ist, dass es die Bewegung des Kraftfahrzeugs (1) begünstigt.

7. Verfahren nach einem der vorhergehenden Ansprüche, das des Weiteren den nachfolgenden Schritt aufweist:
t. Einstellen eines Geschwindigkeitsgrenzwerts für das Kraftfahrzeug (1) während des Steuerns des hydrostatischen Getriebes (4) mit dem eingestellten Sollwert aus Schritt f., so dass eine Geschwindigkeit des Kraftfahrzeugs (1) nicht den Geschwindigkeitsgrenzwert überschreitet, selbst wenn der eingestellte Sollwert höher als der Geschwindigkeitsgrenzwert ist.

8. Verfahren nach einem der vorhergehenden Ansprüche, das des Weiteren den nachfolgenden Schritt aufweist:
u. Steuern einer Kupplung (5) des Kraftfahrzeugs (1) in einer vollständig eingerückten Position während des Steuerns des hydrostatischen Getriebes (4) mit dem Sollwert aus Schritt f.,
wobei die Kupplung (5) dazu angeordnet ist, wahlweise einen Motor (2) des Kraftfahrzeugs mit der Antriebsachse (3) zu verbinden.

9. System zum Steuern eines hydrostatischen Getriebes eines Kraftfahrzeugs (1) mit einer Antriebsachse (3), die von dem hydrostatischen Getriebe (4) angetrieben wird, wobei das System eine Steuereinheit (8) aufweist, die dazu programmiert ist, das Verfahren nach einem der vorhergehenden Ansprüche auszuführen.

10. System nach Anspruch 9, das des Weiteren aufweist:
- einen ersten Messgrößenaufnehmer (T1), der mit der Steuereinheit (8) gekoppelt ist und der dazu eingerichtet ist, die erste Größe zu erfassen, wobei die Steuereinheit (8) das Mapping speichert.

11. System nach Anspruch 9 oder 10, das des Weiteren eine Kupplung (5) aufweist, die dazu angeordnet ist, einen Motor (2) des Kraftfahrzeugs (1) mit der Antriebsachse (3) zu verbinden,
wobei die Steuereinheit (8) des Weiteren dazu programmiert ist, die Kupplung (5) während dem Ausführen des Verfahrens in einer vollständig eingerückten Position zu steuern.

## Revendications

1. Un procédé de commande d'une transmission hydrostatique (4) d'un véhicule automobile (1) comportant un essieu moteur (3) entraîné par la transmission hydrostatique (4), le procédé comprenant les étapes consistant à :
a. détecter une commande d'entrée émise par une pédale d'embrayage actionnable par le conducteur du véhicule automobile (1),
b. déterminer un couple d'entraînement limite transmissible à l'essieu moteur (3) en fonction de la commande d'entrée détectée par le biais d'une cartographie prédéterminée,
c. acquérir une première valeur indicative d'un couple réel agissant sur l'essieu moteur (3),
d. calculer une valeur de vitesse souhaitable pour le véhicule automobile (1) en fonction d'une relation entre le couple d'entraînement limite et le couple réel indiqué par la première valeur acquise,
e. déterminer une vitesse cible pour le véhicule automobile (1) sur la base de la valeur de vitesse souhaitable calculée, et
f. définir la vitesse cible comme point de consigne pour la commande de la transmission hydrostatique (4) ;
le procédé étant **caractérisé en ce que** l'étape d. comprend les étapes consistant à :
k. calculer une valeur d'accélération basée sur un rapport entre une différence entre le couple d'entraînement limite et un module du couple réel indiqué et une deuxième valeur représentant une masse du véhicule automobile (1),
l. calculer la valeur de vitesse souhaitable sur la base de la valeur d'accélération calculée et l'étape k. comprend en outre l'étape consistant à :
m. calculer la différence entre le couple d'entraînement limite et le module du couple réel indiqué, lorsque la première valeur indique que le couple réel est destiné à s'opposer au mouvement du véhicule automobile (1),
et/ou
n. calculer la différence entre le module du couple réel indiqué et le couple d'entraînement limite, lorsque la première valeur indique que le couple réel est destiné à favoriser le mouvement du véhicule automobile (1).

2. Le procédé selon la revendication 1, dans lequel l'étape e. comprend les étapes consistant à :
g. extraire une vitesse demandée pour le véhicule automobile (1) à partir d'un dispositif de contrôle de la vitesse du véhicule automobile (1),
h. déterminer la vitesse cible à la suite d'une comparaison entre la valeur de vitesse souhaitable calculée et la vitesse demandée.

3. Le procédé selon la revendication 2, dans lequel l'étape h. comprend l'étape consistant à :
i. déterminer la vitesse cible comme étant la plus basse entre la valeur de vitesse souhaitable calculée et la vitesse demandée, lorsque la première valeur indique que le couple réel est destiné à s'opposer au mouvement du véhicule automobile (1), et/ou l'étape consistant à :
j. déterminer la vitesse cible comme étant la plus élevée entre la vitesse calculée et la vitesse demandée, lorsque la première valeur indique que le couple réel est destiné à favoriser le mouvement du véhicule automobile (1).

4. Le procédé selon les revendications précédentes, dans lequel l'étape 1 comprend :
o. l'acquisition d'une troisième valeur indiquant une vitesse réelle actuelle du véhicule automobile (1),
p. le réglage d'un gain proportionnel comme premier coefficient si la valeur d'accélération est positive ou comme second coefficient dans le cas contraire,
q. le calcul de la valeur de vitesse souhaitable sur la base d'une somme algébrique de la vitesse réelle actuelle indiquée par la troisième valeur et de la valeur d'accélération multipliée par le gain proportionnel.

5. Le procédé selon l'une quelconque des revendications précédentes, comprenant en outre l'étape consistant à :
r. fixer une limite d'accélération positive pour le véhicule automobile (1) pendant la commande de la transmission hydrostatique (4) par rapport au point de consigne de l'étape f.,
dans lequel la limite d'accélération positive définie est la plus basse entre la valeur d'accélération calculée et une valeur limite positive prédéterminée, lorsque la première valeur indique que le couple réel est destiné à s'opposer au mouvement du véhicule automobile (1), et
dans lequel la limite d'accélération positive définie est la plus haute entre la valeur d'accélération calculée et la valeur limite positive, lorsque la première valeur indique que le couple réel est destiné à favoriser le mouvement du véhicule automobile (1).

6. Le procédé selon l'une quelconque des revendications précédentes, comprenant en outre l'étape consistant à :
s. fixer une limite d'accélération négative pour le véhicule automobile (1) pendant la commande de la transmission hydrostatique (4) par rapport au point de consigne de l'étape f.,
dans lequel la limite d'accélération négative définie est la plus haute, en module, entre la valeur d'accélération calculée et une valeur limite de décélération prédéterminée, lorsque la première valeur indique que le couple réel est destiné à s'opposer au mouvement du véhicule automobile (1), et
dans lequel la limite d'accélération négative définie est la plus basse, en module, entre la valeur d'accélération calculée et la valeur limite de décélération, lorsque la première valeur indique que le couple réel est destiné à favoriser le mouvement du véhicule automobile (1).

7. Le procédé selon l'une quelconque des revendications précédentes, comprenant en outre l'étape consistant à :
t. fixer une limite de vitesse pour le véhicule automobile (1) pendant la commande de la transmission hydrostatique (4) par rapport au point de consigne de l'étape f., de sorte qu'une vitesse du véhicule automobile (1) ne dépasse pas la limite de vitesse même si le point de consigne est supérieur à la limite de vitesse.

8. Le procédé selon l'une quelconque des revendications précédentes, comprenant en outre l'étape consistant à :
u. commander un embrayage (5) du véhicule automobile (1) dans une position complètement engagée pendant la commande de la transmission hydrostatique (4) par rapport au point de consigne de l'étape f.,
dans lequel l'embrayage (5) est conçu pour raccorder de manière sélective un moteur (2) du véhicule automobile à l'essieu moteur (3).

9. Un système de commande d'une transmission hydrostatique d'un véhicule automobile comportant un essieu moteur (3) entraîné par la transmission hydrostatique (4), le système comprenant une unité de commande (8) programmée pour mettre en œuvre le procédé selon l'une quelconque des revendications précédentes.

10. Le système selon la revendication 9, comprenant en outre
- un premier transducteur (T1) couplé à l'unité de commande (8) et configuré pour détecter la première valeur,
dans lequel l'unité de commande (8) mémorise la cartographie.

11. Le système selon la revendication 9 ou la revendication 10, comprenant en outre un embrayage (5) conçu pour raccorder de manière sélective un moteur (2) du véhicule automobile (1) à l'essieu moteur (3),
dans lequel l'unité de commande (8) est en outre programmée pour commander l'embrayage (5) dans une position complètement engagée, pendant la mise en œuvre dudit procédé.
